# EUROPEAN PATENT SPECIFICATION

(11) **EP 3 170 390 B1**
(45) Date of publication and mention of the grant of the patent: **15.04.2020**
(21) Application number: 16199659.0
(22) Date of filing: 18.11.2016
(51) Int. Cl.: A01K 97/12

(54) **BITE INDICATOR**
BISSANZEIGER
INDICATEUR DE TOUCHE

(30) Priority: 20.11.2015 GB 201520495
(43) Date of publication of application: 24.05.2017
(73) Proprietor: Catchum 88 Limited, Hockley SS5 5LR (GB)
(72) Inventor: NASH, Kevin Robert, Hockley SS5 5LR (GB); HAWKER, Michael John, Ipswich IP7 5R (GB)
(74) Representative: Dummett Copp LLP

(56) References cited:
- EP-A1- 2 907 384
- GB-A- 2 209 911
- GB-A- 2 348 095

## Description

### FIELD OF THE INVENTION

The present invention relates to a bite indicator, an assembly comprising an angling apparatus and a bite indicator, and a method of indicating a bite relating to a bite indicator.

### BACKGROUND TO THE INVENTION

Bite indicators are commonly used by anglers in order to help signal the occurrence of a bite on angling apparatus. In particular, carp anglers frequently use such bite indicators which provide an audible and/or visual signal indicating the occurrence of a bite.

Bite indicators usually include either a drum or a stylus to detect the movement of a fishing line. Both systems can be used in detecting line movements (or deviations) and/or line speed. These bite indicators generally include control means which set a threshold such that if the line deviates by a specific distance or if the line speed increases above a pre-determined threshold then an alarm signal will be generated. However, there is a significant problem of such bite indicators triggering false alarms in the absence of a genuine bite. Such false alarms can cause the anglers to ignore the alarm system and thereby miss any genuine bite.

Bite indicators generally rely on a movement detector which detects movement of the fishing line to which a hook and bait is attached. During a bite, a fish attempts to take the bait and subsequently the fishing line moves. However, such line movement will also occur due to the water movement and weather and other factors. Accordingly, bite indicators commonly emit false alarms which may indicate the occurrence of a bite when no such bite has occurred.

Bite indicators may be provided with sensitivity controls such that an alarm is only produced if the line moves beyond a certain distance or deviates by a specific amount or if the speed of the line movement is above a pre-determined threshold. However, environmental conditions (water currents and/or weather/wind) can still cause such alarms to trigger. If the angler sets the sensitivity too low then the angler may not receive such false alarms. However, the angler may also miss real and genuine bites. Accordingly, it is difficult and skilful for an angler to set the sensitivity according to the actual conditions since the indicating parameter (line deviation or line speed) may still be triggered by fluctuating environmental conditions rather than purely by a genuine bite.

GB 2 209 911 provides a bite indicator for indicating the movement of a fishing line in which vibrations caused by movement of the fishing line against a support are converted into electrical signals. The alarm system is triggered when the line moves over the support faster than a preset rate and provides and audible and/or visual warning.

It is an aim of the present invention to overcome at least one problem associated with the prior art, whether referred to herein or otherwise.

### SUMMARY OF THE INVENTION

According to a first aspect of the present invention there is provided a bite indicator comprising a housing, guide means for guiding a fishing line relative to the housing, a stylus movably mounted to the housing, a control means, a signal processing means and a sensing means for sensing movement of the stylus;
wherein the stylus is arranged to contact a fishing line such that movement of the fishing line relative to the stylus causes the stylus to vibrate and the sensing means senses the vibrations and transmits a signal to the signal processing means;
the signal processing means being arranged to monitor the signal over a period of time and to compare the signal with a signal detected earlier; and
wherein the signal processing means is arranged to generate an alarm signal dependent upon a comparison of the signal over the period of time, said bite indicator being characterised in that:
   the signal processing means is arranged to measure the acceleration of the fishing line over the stylus and the control means provides a predetermined threshold acceleration wherein the alarm signal is generated if the predetermined threshold acceleration is exceeded.

Preferably the alarm signal is generated as a result of the behaviour of the signal over the period of time.

The signal processing means may comprise a plurality of signal behaviours (functions or patterns) which are being monitored and which, when detected, will generate an alarm condition.

The signal behaviours may comprise:
i. the detection of the signal above a threshold for a predetermined length of time; and
ii. the change in the signal and wherein this change in signal is above a predetermined threshold.

The signal behaviours may comprise a cadence indicating a repetitive increase in signal above a set level followed by a decrease below a set level
The alarm signal may be generated as a result of a combination of signal behaviours.

The signal behaviour may be programmable. The signal behaviour may comprise a profile of bite signal behaviours.

Preferably the signal from the stylus is processed to provide a waveform and wherein the amplitude of the waveform is the parameter being monitored to generate an alarm signal. Preferably a change in amplitude of the monitored signal over a predetermined amount of time above a threshold limit is arranged to generate an alarm condition. Preferably the derivative of the amplitude of the monitored signal above a predetermined threshold limit is arranged to generate an alarm signal.

Preferably the signal from the stylus is rectified to provide a rectified waveform wherein the amplitude of the rectified waveform is the parameter being monitored to generate an alarm signal.

Preferably the signal from the stylus is smoothed to provide a smoothed waveform wherein the amplitude of the smoothed waveform is the parameter being monitored to generate an alarm signal.

Preferably the signal from the stylus is amplified to provide an amplified waveform wherein the amplitude of the amplified waveform is the parameter being monitored to generate an alarm signal.

Preferably the signal from the stylus comprises a voltage signal.

The signal processing means may monitor (and quantify/measure) the signal (signal amplitude/parameter) at a first time and monitor (and quantify/measure) the signal (signal amplitude/parameter) at a second time and calculate a difference in the signal (signal amplitude/parameter) over this time period and wherein the alarm signal is generated when this change is above a predetermined value and/or when the signal (signal amplitude/parameter) maintains a level above a predetermined threshold for a predetermined period of time.

The signal processing means preferably continually monitors and/or analyses the signal and compares the monitored signal to earlier signals.

The parameter may comprise a measure of the velocity of the fishing line and the signal processor may monitor the change of the velocity of the fishing line and preferably generates an alarm signal when the rate of change of the velocity (acceleration) is above a threshold value.

The parameter may comprise a measure of the velocity of the fishing line and the signal processor may generate an alarm signal when the velocity is above a threshold value for a predetermined amount of time.

Preferably the signal processor monitors a plurality of parameters to detect an alarm condition and the signal processor generates an alarm signal when one of the monitored parameters over a period of time satisfies a bite condition or bite behaviour (i.e. a bite condition is met or a bite behaviour is detected).

Preferably the stylus comprises a retaining portion and a shaft portion.

Preferably the retaining portion comprises two converging sides. Preferably the retaining portion provides a mouth portion for allowing movement of the fishing line into and out of engagement with a contact surface of the stylus. Preferably the retaining portion comprises a substantially V-shaped or U-shaped portion or Y-shaped portion.

Preferably the shaft portion extends downwardly from the retaining portion.

Preferably the retaining portion is provided on an upper end of the shaft portion.

The retaining portion may comprise a protective coating and preferably comprises a ceramic material. The protective coating may prevent the fishing line from cutting into the material of the stylus (or sensing material of the stylus).

Preferably a single end of the stylus is mounted to the housing. Preferably the stylus is free to vibrate (or move) about a fixed end.

Preferably the housing comprises retaining means to retain the stylus to the housing. Preferably the retaining means comprises a fixing base. Preferably the retaining means allows vibration/movement of the stylus about the fixing base. The fixing base may comprise a resin into which (an end of) the stylus is bonded/secured/adhered. The opposite end of the stylus may comprise the retaining portion. The stylus may be vibrationally or movable mounted relative to the housing.

The fixing base may be moveably mounted within the housing. The fixing base may be pivotally mounted within the housing. The fixing base may be pivotal from a first position to a second position. The fixing base may be retained in the first position as the fishing line moves in a first direction (towards a reel) and may be retained in the second position as the fishing line moves in the second opposite direction (away from the reel). The bite indicator may comprise a position indicator to indicate if the fixing base is in the first position or the second position. The position indicator may indicate the direction of movement of the fishing line.

Preferably the sensing means senses movement/vibration of the stylus. Preferably the sensing means comprises a sensor element. The sensor element may comprise a movement transducer.

Preferably the sensing means is incorporated into the stylus. Preferably the stylus comprises a piezo-electric material. A shaft portion of the stylus may comprise a piezo-electric material.

The piezo-electric material may be arranged to produce an electric signal which may be dependent upon the tension/compression of the shaft which may be indicative of the vibration of the overall stylus.

The stylus may comprise a piezo-electric strip and may comprise a piezo-electric strip adhered and/or bonded thereto.

The sensing means may comprise an (electro) magnetic transducer which is arranged to produce an electric signal based on a vibrational movement. The transducer may comprise a movable magnet and a static coil or may comprise a movable coil and a static magnet. The movable component may be mounted/fixed to the shaft of the stylus and the static component may locate adjacent to and/or around the movable component.

Preferably the stylus comprises an upper contact surface over which the fishing line is arranged to move.

Preferably frictional movement of the fishing line over the upper contact surface creates vibrations within the stylus and more preferably within the shaft portion of the stylus.

Preferably the sensing means is arranged to sense vibrations and produce a corresponding electrical signal. Preferably the sensing means comprises a sensor (transducer) and more preferably comprises a piezo-electric transducer and this may be incorporated into the stylus.

The sensing means may be arranged to sense the direction of travel of the fishing line over the stylus.

The shaft portion may comprise a first piezo-electric transducer and a second piezo electric transducer.

The shaft portion may comprise a first piezo-electric strip adhered/bonded to a first surface and a second piezo electric strip adhered/bonded to a second surface. The first surface may be provided on a first side of the shaft and the second surface may be provided on a second (opposing) side of the shaft.

Preferably the control means comprises signal processing means and more preferably comprises a signal processor.

Preferably the control means comprises sensitivity means wherein a user can increase and/or decrease the predetermined threshold acceleration.

Preferably the alarm comprises an audible alarm.

Preferably the control means comprises a pitch adjustment actuator in order for a user to adjust the pitch of the audible alarm.

The pitch adjustor may comprise a manually actuated adjustor.

Preferably the alarm means comprises a visual alarm. Preferably the visual alarm comprises one or more illuminated members. Preferably the or each illuminated member may comprise an LED. The housing may comprise an illuminated member on a front face or an illuminated member on a rear face.

Preferably the visual alarm comprises a series of illuminating members. Preferably the visual alarm comprises a series of illuminating members which may be arranged to illuminate in a sequence in order to indicate the scale or amount of acceleration of the fishing line over the stylus.

Preferably the bite indicator comprises a portable operating unit. Preferably the portable operating unit wirelessly communicates with a bite detecting unit.

The portable operating unit may comprise audible alarm means. The portable operating unit may comprise a volume control. Preferably the portable operating unit comprises a visual alarm.

The portable operating unit may comprise a vibrating alarm. The vibrating alarm may comprise a vibration motor and more preferably comprises an eccentric rotating mass vibration motor.

Preferably the portable operating unit comprises a sensitivity control actuator in order for a user to control the sensitivity of the bite indicator.

Preferably the bite indicator comprises guide means to guide the fishing line onto the upper surface of the stylus.

The bite indicator may comprise an indicating light. Preferably the indicating light can be actuated by a remote actuator. The indicator light may be located on the bite detecting/monitoring unit and the actuator may be provided on a portable unit to which are in wireless communication.

Preferably the bite indicator comprises a line movement direction sensor. Preferably the line direction sensor detects and/or indicates the direction of movement of the (fishing) line and preferably detects/indicate movement of the (fishing) line towards and/or away from the reel/tip of the rod.

Preferably the bite indicator provides a first audible alarm to signal a bite detected with the (fishing) line moving in a first direction and a second audible alarm to signal a bite detected with the (fishing) line moving in a second direction. Preferably the first direction extends along a first longitudinal direction of a rod and/or towards a fishing reel and the second direction extends along a second opposite longitudinal direction of the rod and/or away from the reel. Preferably the first audible alarm comprises a different tone to the second audible alarm.

According to a second aspect of the present invention there is provided an angling assembly comprising a fishing rod, a fishing line and a bite indicator, the bite indicator comprising a housing, guide means for guiding the fishing line relative to the housing, a stylus movably mounted relative to the housing, a control means, a signal processing means and a sensing means for sensing movement of the stylus;
wherein the stylus is arranged to contact a fishing line such that movement of the fishing line relative to the stylus causes the stylus to vibrate and the sensing means senses the vibrations and transmits a signal to the signal processing means;
the signal processing means being arranged to monitor the signal over a period of time and to compare the signal with a signal detected earlier; and
wherein the signal processing means is arranged to generate an alarm signal dependent upon a comparison of the signal over the period of time, said assembly being characterised in that:
   the signal processing means is arranged to measure the acceleration of the fishing line over the stylus and the control means provides a predetermined threshold acceleration wherein the alarm signal is generated if the predetermined threshold acceleration is exceeded.

According to a third aspect of the present invention there is provided a method of indicating a bite, the method comprising providing a bite indicator for mounting to an angling apparatus, the bite indicator comprising a housing, guide means for guiding a fishing line relative to the housing, a stylus movably mounted relative to the housing, a control means, a signal processing means and a sensing means for sensing movement of the stylus; the method comprising:
locating a fishing line over a contact surface of the stylus such that movement of the fishing line relative to the stylus causes the stylus to vibrate;
sensing vibrations of the stylus and transmitting a signal to the signal processing means;
monitoring the signal over a period of time and comparing the signal with a signal detected earlier; and
generating an alarm signal dependent upon a comparison of the signal over the period of time, said method being characterised in that it comprises:
   measuring the acceleration of the fishing line over the stylus by the signal processing means and
   generating the alarm signal if a predetermined threshold acceleration provided by the control means is exceeded.

### BRIEF DESCRIPTION OF THE DRAWINGS

Figure 1 is a perspective view of a preferred embodiment of a bite indicator in accordance with the present invention;
Figure 2 is a front view of a preferred embodiment of a bite indicator in accordance with the present invention;
Figure 3 is a side view of a preferred embodiment of a bite indicator in accordance with the present invention;
Figure 4 is a rear view of a preferred embodiment of a bite indicator in accordance with the present invention;
Figure 5 is a top view of a preferred embodiment of a bite indicator in accordance with the present invention;
Figure 6 is a side view of a preferred embodiment of a bite indicator in accordance with the present invention;
Figure 7 is a bottom view of a preferred embodiment of a bite indicator in accordance with the present invention;
Figure 8 is a cross-sectional view of a preferred embodiment of a bite indicator in accordance with the present invention; and
Figure 9 is a front view of a preferred embodiment of a portable controller for a bite indicator in accordance with the present invention.

### DESCRIPTION OF THE PREFERRED EMBODIMENTS

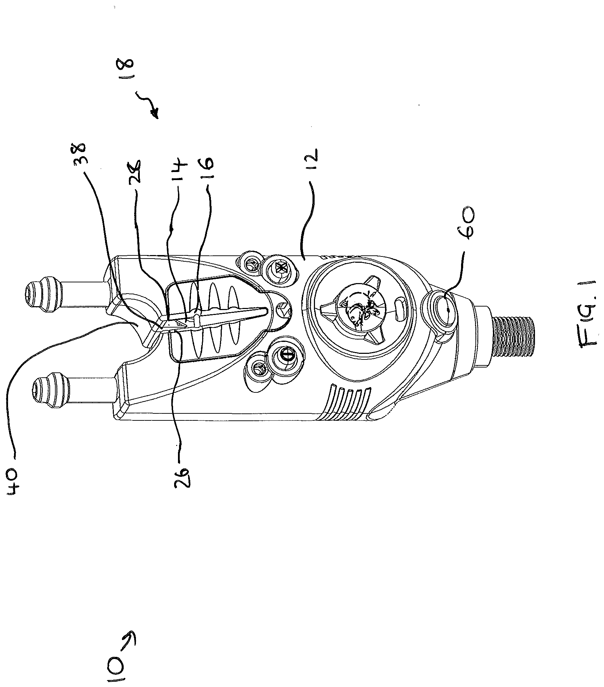

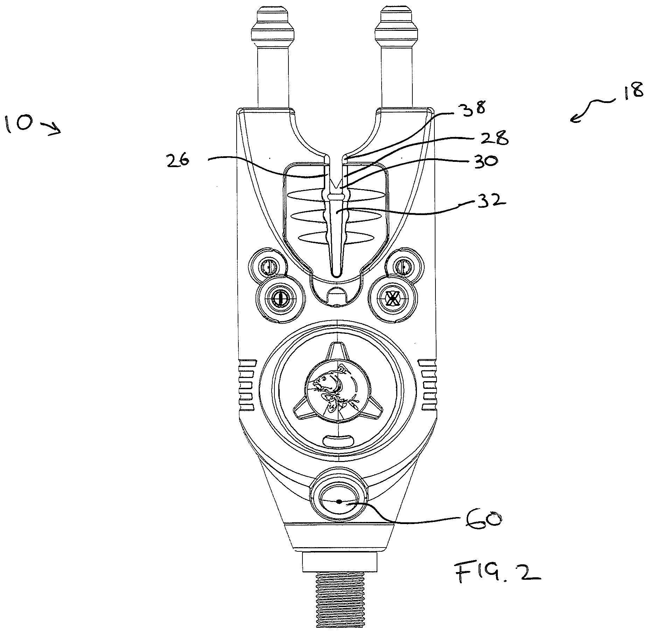

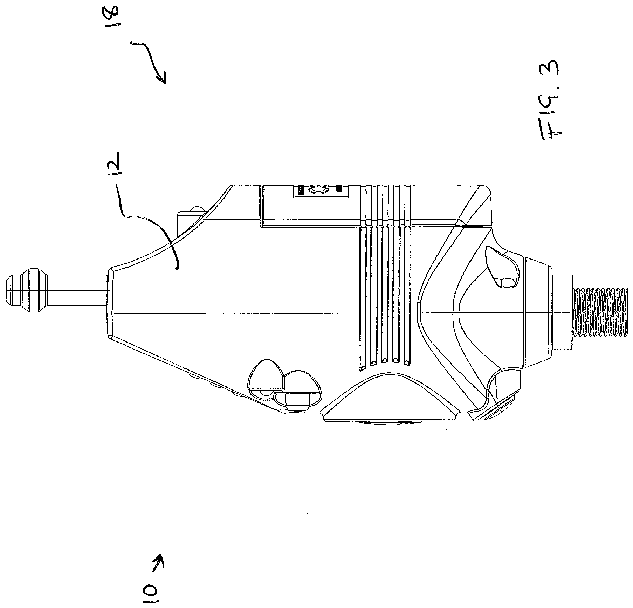

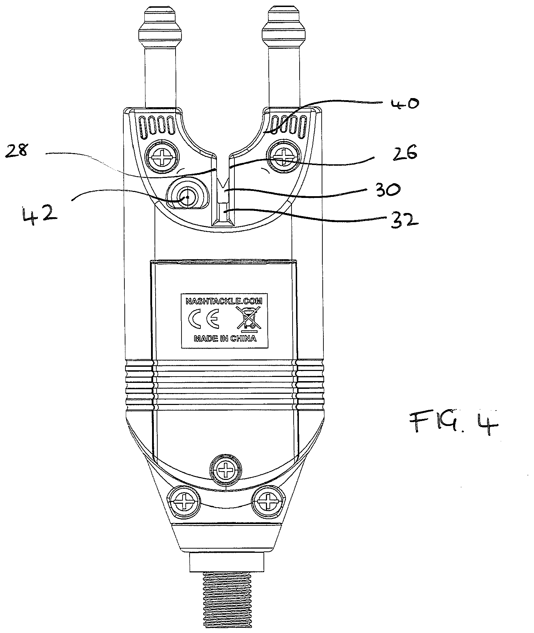

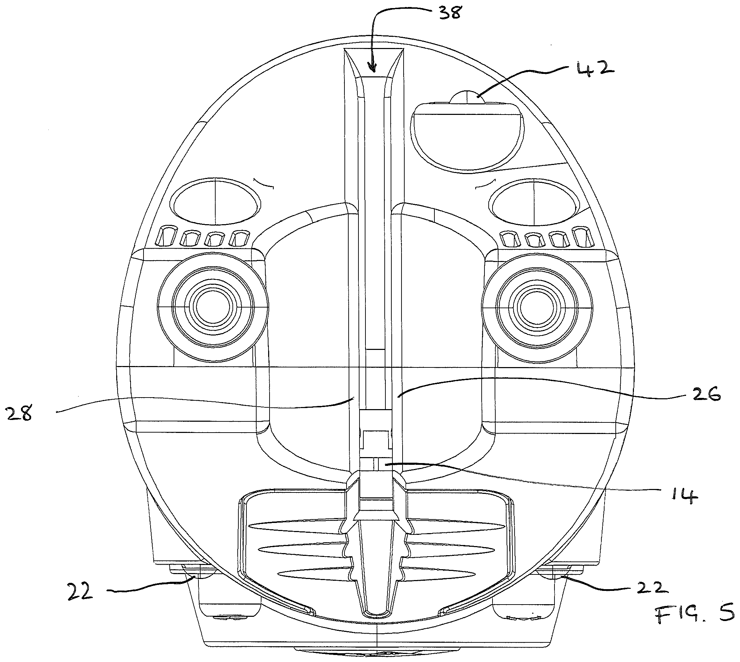

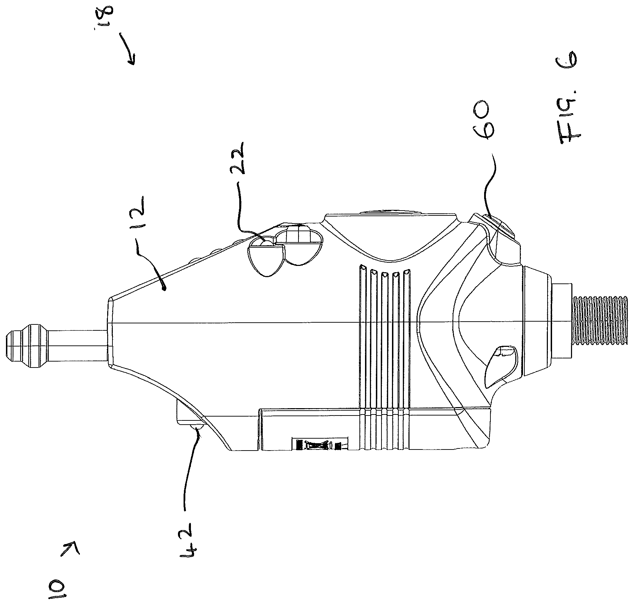

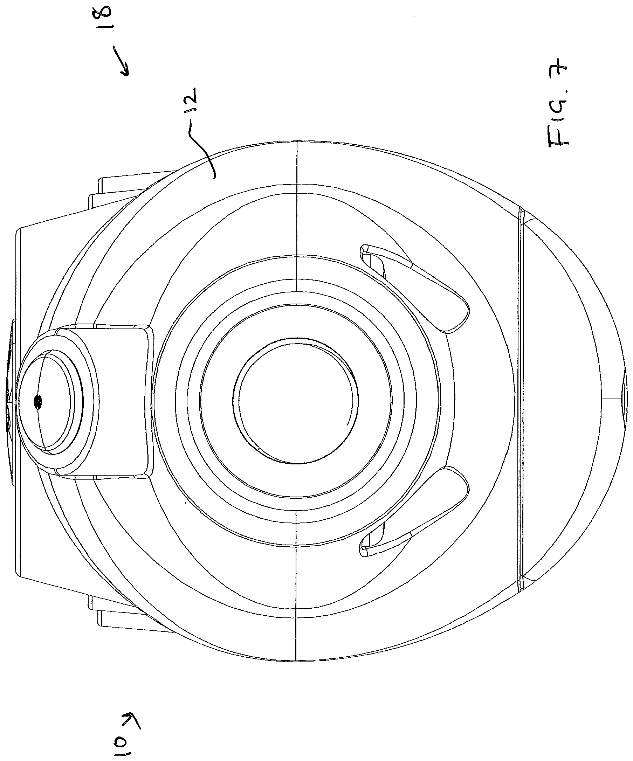

As shown in Figure 1 to Figure 8, a bite indicator 10 comprises a detecting/monitoring unit 18 comprising a housing 12 including guide means 16 through which the fishing line is retained and guided on or towards a stylus 14. In use, the fishing line is urged towards the stylus 14 such that movement of the fishing line causes vibrational movement within the stylus 14. It is this vibrational movement which is the source for triggering an indication of a bite. Accordingly, the present invention provides a bite indicator 10 which is reliant upon a vibrational stylus 14 rather than a rotating wheel or rotating drum as with some prior art bite indicators.

The stylus 14 is mounted within the housing 12 of the bite indicator 10. The bite indicator 10 includes sensing means which is arranged to sense the motion and specifically the vibration of the stylus 14 and the sensing means produces an electrical signal in relation to the vibrational movement of the stylus 14. Control means of the bite indicator 10 is arranged to monitor the movement of the stylus 14 and to selectively generate an alarm signal. In particular, signal processing means is arranged to generate an alarm signal dependent upon a comparison of the signal over the period of time. The alarm signal is thereby generated as a result of the behaviour of the signal over the period of time rather than solely a comparison of a value of the signal against a fixed/set value.

The sensing means comprises a sensor or transducer and, in particular comprises a vibration sensor. The vibration sensor comprises a piezo-electric sensor. The electronic signal from the vibration sensor is analogue. The signal processor provides digital processing which is used to process the signal and generate the various alarm tones and alarm conditions. For example, the tone of the audible alarm may be arranged to increase as the acceleration of the fishing line increases.

The signal processor system includes an amplifier and rectification (and smoothing) of the signal generated by the piezo electric sensor. The signal processing system may specifically include a phase locked loop control system.

The signal processor thereby monitors, records and analyses this rectified signal. In particular the amplitude (voltage) of this signal is monitored to determine if the amplitude (voltage) remains above a set level for a predetermined amount of time, or if the amplitude (voltage) suddenly changes (increases) or if the amplitude (voltage) demonstrates a repetitive function (cadence). Each of these may indicate a bite and all of these functions are continually monitored and they do not solely rely on a single set voltage value to trigger an alarm which may be a cause of a false alarm. The functional triggers are dynamic and relative since they are analysed against or compared with an earlier previous reading from the sensor. In some embodiments, look-up tables (LUTs) are used to minimise or reduce processing time etc.

The present invention monitors the behaviour of the detected signal over a period of time to trigger a bite alarm rather than solely detecting a signal value above a baseline threshold (or other single set value) to trigger a bite alarm. For example, the detection of the velocity of the fishing line above a set value may not be sufficient to trigger an alarm. The present disclosure may require the velocity to be above the threshold for a set length of time before an alarm is triggered. Similarly, the alarm may be triggered if a change in the velocity is detected within a period of time (which may indicate an acceleration of the fishing line). Furthermore, the cadence may be detected and used to trigger the alarm and such a behavioural pattern may be demonstrated by repetitive stop-start movements of the fishing line. Such bite behaviours would not necessarily be sensitively detected by prior art bite alarms. Accordingly the present disclosure discriminates against general movement of the fishing line as compared to an actual bite.

The present invention monitors the behavioural patterns including the acceleration of the fishing line which reduces and attempts to eliminate the triggering of false alarms. It has been discovered that the use of the behavioural patterns, for example, an acceleration parameter (or rate of change of speed of the fishing line) provides a better indication of a bite compared to other indicator parameters (e.g. deviation of the fishing line or speed of the fishing line). These other detecting parameters may indicate other interactions (i.e. non fishing bites) which may cause movements or changes to movements of the fishing line. It has been found that the use of a behavioural pattern (e.g. an acceleration parameter above a pre-determined amount) is triggered by a genuine bite and is not reached by many other conditions. Accordingly, these behavioural patterns and indicating parameters provide a better distinguishing parameter for use with bite indicators.

The present disclosure also relates to the use of a stylus sensor system rather than a wheel or drum sensor. The stylus 14 comprises a simple stylus member 14 with associated sensing means in order for vibrations to be reliably and easily monitored. Accordingly, the product is relatively simple with a few moving parts. This is a further advantage for the present invention since such bite indicators may be used in relatively harsh environments and will be exposed to the elements and various weather conditions over prolonged periods of time.

The control means of the bite indicator 10 enables a user to adjust the sensitivity of the bite indicator 10. The sensitivity control allows the angler to increase or decrease trigger conditions, for example, the pre-determined acceleration threshold at which the alarm signal would be activated. The sensitivity may adjust a setting whereby an alarm is signalled if the velocity is over a set (adjustable) level for a set (adjustable) period of time. In addition, the bite alarm may monitor the cadence which relates to the stop-start nature of movement of the fishing line. An alarm may be signalled dependent upon the frequency of this pattern of movement and the sensitivity setting may be used to adjust this level.

Overall, the present invention may include numerous behavioural patterns which may trigger the alarm. These behavioural patterns may be customised by a user. Alternatively, these behavioural patterns may be recorded and provided remotely and then provided to the end user. For example, these behavioural patterns may be programmed specifically for the fishing conditions such that the bite alarm is customised for use with the specific fishing set up and conditions. These maybe (constantly) changed and updated with use. The programmed behavioural patterns may include different profile for fishing in strong currents or still water etc.

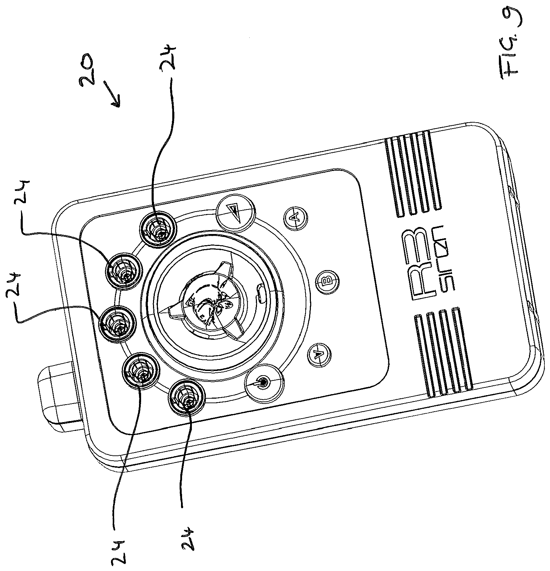

The bite indicator 10 may comprise a main detecting/monitoring unit 18 associated with a portable (handheld) control unit 20 (as shown in Figure 9) whereby the user can set the sensitivity on the portable unit 20 which will then be wirelessly transmitted to the main bite indicator unit 18. This portable unit 20 may also include the audible alarm such that the audible alarm will be triggered remotely from the main detecting unit 18 which is mounted directly to the angling apparatus. For example, the angler may be located within a shelter spaced from the angling apparatus (fishing rod) and this remote audible alarm will provide a better alert to the angler.

The bite indicator 10 may also include visual alerts in the form of one or more LEDs 22, 24 which may be located on the housing 12 of the main unit 18 of the bite indicator 10 and/or on the handheld portable unit 20. The signalling of a potential bite to the angler purely with an audible alert may be unreliable, in particular where there is a lot of background noise.

The bite indicator 10 may also provide a vibrational alert wherein a vibrating unit is located within the handheld portable unit 20. The vibrating unit may comprise an electric motor which is arranged to produce a detectable vibrational movement. For example, the vibrating unit may comprise an eccentric rotating mass vibration motor as used in the mobile phone/pager industry. The vibration motor comprises a DC motor with an offset (non-symmetric) mass attached to a shaft such that a vibrational sensation is created to a user.

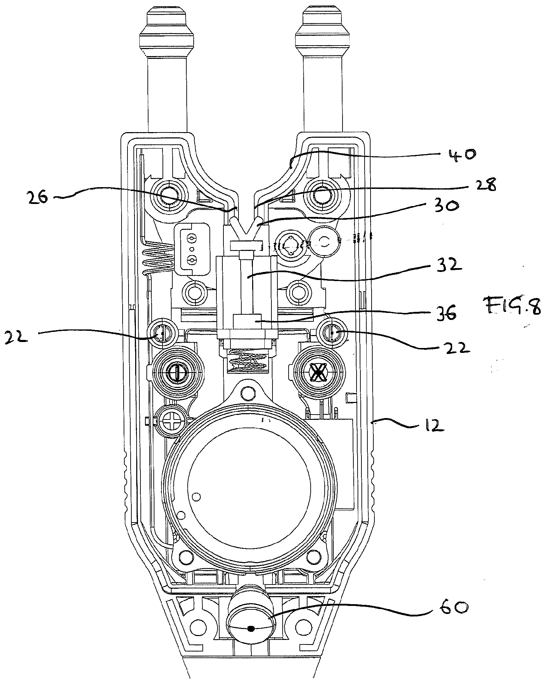

As shown in Figure 8, the main unit 18 of the bite indicator 10 comprises a housing 12 providing a generally channel shaped portion through which the fishing line is arranged to pass. This channel portion provides two lateral guiding walls 26, 28 which retain the fishing line within the housing 12. In particular, these retaining lateral walls 26, 28 prevent the fishing line being pulled sideways (laterally) away from (and off) the upper surface of the stylus member 14.

The stylus member 14 comprises a V-shaped receiving portion 30 which is located at an upper end of a shaft portion 32. The shaft portion 32 (and v-shaped receiving portion 30) incorporates the piezo-electric material which produces a signal associated with the vibration or the stylus member 14.

The piezo-electric stylus acts as a piezo-electric transducer which produces an electric signal based on the vibration of the shaft. The base of the shaft 32 is fixed within a resin 36 within the housing of the bite detector 10. Accordingly the stylus 14 is free to vibrate from this end of the shaft 32 which has a fixed position within the resin 36. The upper V-section 30 of the stylus 14 has a protective coating comprising a ceramic material. This protective coating is bonded/adhered or otherwise secured at the upper end of the piezo-electric shaft 32 to provide a single stylus member 14 or stylus element. The protective coating prevents the fishing line from cutting into the material of the stylus 14 (including the piezo-electric material) as the fishing line moves over the stylus 14. The stylus may comprise a laminar material with a piezo-electric material laminated to a base material (for example, an insulating material used with rigid printed circuit boards (PCB)).

The piece of piezo-electric material is cut or formed into a strip. This piezo-electric strip may be adhered to or integrally formed as the stylus. The lower end of the stylus 14 is secured (potted) in a resin which secures the stylus 14 to a moulding or base member 36 that is inserted and located into the case (housing 12) of the bite detector 10. The top 30 of the strip or stylus 14 has a Y (or V shaped) shaped component 30. This component 30 comprises a very hard surface which could be a ceramic coating.

The fishing line locates and/or sits into the fork that forms the upper two arms of the Y component 30. As the fishing line passes through the fork in the Y component, the piezo-electric strip 32 resonates and generates a signal which is interpreted by the electronics system of the present invention. In particular, the frequency and/or the amplitude of the signal (and/or the change and/or the rate of change thereof) may be used to quantify the behaviour and movement characteristics of the fishing line.

The stylus 14 moves in response to the variability of the frictional fishing line movement over the upper surface of the Y-component. The movement of the stylus 14 is converted into electrical signals.

At least two alternative technologies may be used to detect and quantify the vibration of the stylus. For example, the piezo-electric sensor as described herein is preferred although alternative embodiments may use electric magnetic transducer arrangements. One option would be a moving coil arrangement incorporating a magnet and an associated coil with respective movement being sensed and detected. This technology could be used as an alternative to the piezo-electric system described above.

Overall, the piezo-electric material (or electro-magnetic transducer) is arranged to produce an electric signal dependent upon the tension/compression (or position) of the shaft which is indicative of the vibration of the stylus.

The bite indicator 10 comprising the piezo electric stylus 14 together with the signal processor may also be arranged to detect a drop back bite (or fall back bite). In such a bite, the fish takes the bait and moves towards the angler (and/or end of the rod). A weight or bobbin is secured to a part of the fishing line located between the bite detector and the reel. This weight hangs or is suspended from the fishing line to create tension in the fishing line. If a fish grabs the bait and moves towards the tip of the fishing rod then this would tend to produce a slack line and such a bite is problematic to detect. With the weighted (bobbin) system, the fishing line is pulled over the stylus in the opposite direction and this movement can again be analysed for bite movement behavioural patterns. In addition, a drop back indicator may be triggered to signal that the fishing line is moving in the opposite direction.

In one embodiment, the fixing base for the stylus is pivotally or rotatably mounted within the housing. For example, the base comprises a cam surface which enables the fixing base to be pivoted between a first position and a second position. Movement of the fishing line towards the rod tip may cause the fixing base (and stylus) to pivot a small amount to a first position which is sensed by a suitable sensor system. Conversely, movement of the fishing line away from the rod tip may cause the fixing base (and stylus) to pivot a small amount to a second position which is again sensed. The sensing system can then be used to distinguish between the different directions of movement of the fishing line and hence distinguish a drop back bite. The two positions may also dictate that different bite behaviour profile patterns are used to generate an alarm signal for a bite.

The movement of the bait may also produce a sudden deceleration in the line (for example whilst fishing in strong currents) rather than a sudden increase. However, in the present description, a sudden deceleration is included in the definition of acceleration, i.e. the value is a vector quantity and a high acceleration or a high deceleration may both trigger the alarm.

In some embodiments, the shaft of the stylus may have a first piezo electric transducer along one face of the shaft 32 and a second piezo electric transducer along the opposite face. One face may be directed towards one end of the rod and the other face may be directed towards the other end of the rod. In this arrangement, the line passes over the V-section 30 and may tend to bend the stylus shaft 32 such that one face is slightly compressed whilst the other may is slightly elongated or stretched (or in tension). This may create a difference in output voltage from the two piezo-electric transducers to enable the bite detector 10 to determine which the direction that the line is moving (i.e. towards or away from the end of the rod). This may help in the detection of a drop back bite where the fishing line is moving in a first direction but then starts to be pulled towards the second direction.

In preferred embodiments, the audible means (speaker) of the control unit 20 and/or the monitoring unit is arranged to produce different alarm signals depending upon the type of bite detected. This may enable an angler to distinguish between a normal bite and a fall back bite. For example, an alarm of a first tone may be generated/emitted for a conventional bite and an alarm of a second tone may be generated/emitted for a fall back bite.

Alternatively, in the electro-magnetic version, a two channel output (stereo) could be used to detect direction (drop back).

In further embodiments, a light beam is used to determine in which direction the piezo-electric shaft 32 (strip) or moving coil or moving magnet arm is flexing. The direction of flex will be controlled by the direction of the fishing line. Accordingly, the bite detector 10 registers and monitors the direction of travel of the fishing line.

As mentioned above, the detection of a fall back mode may comprise a two channel piezo-electric sensor that can detect fall back. Alternatively, a light beam is used to detect movement of the piezo-electric sensor to detect fall back.

In the two channel piezo-electric sensor there is a piezo-electric coating on both sides of the vertically mounted sensor strip or shaft 32 of the stylus 14. Both piezo-electric sides of the sensor strip (shaft 32) generate a voltage when vibrated but the output voltage will vary depending on which side of the strip (shaft 32) is in tension and which is in compression. The variation in voltage output is used to determine whether the strip (shaft 32) is flexing towards the rod tip or away from the rod tip. Accordingly, a fall back mode can be detected.

An alternative option to detect the direction of movement of the sensor strip (shaft 32 of the stylus 14) is to pass a light beam immediately in front of, or behind, the strip (shaft 32 of the stylus 14). In one mode, the fishing line moves and the piezo-electric strip generates a voltage and, for example, the light beam is interrupted by the sensor strip (stylus shaft 32). This interruption of the light beam is detected by a light sensor and this detection is used to show that a fall back condition has been detected. In an alternative mode, the fishing line moves and the piezo-electric strip generates a voltage and, for example, the light beam is not interrupted by the sensor strip (stylus shaft 32). The lack of an interruption signal of the light beam is monitored/detected by a sensor and this lack of a detection signal is used to show that the fishing line is not in a fall back condition.

Accordingly, embodiments of the present invention can also detect two activation states. State 1 comprises the activation of the piezo-electro strip and a voltage is sensed (and the light beam is not interrupted). State 2 comprises the activation of the piezo-electro strip is activated and a voltage is sensed and also the light beam is interrupted.

The main body 18 of the bite detector 10 is mounted on a mounting stick such that the fishing line of the fishing rod is urged inwardly into the retaining slot 38 of the housing. In particular, the fishing line is positively urged on to the upper surface of the stylus 14. The upper surface of the stylus 14 provides a curved contact surface which will be perpendicular to the direction of movement of the fishing line. This perpendicular frictional movement creates the associated vibrations which are detected in the stylus 14.

The housing 12 of the bite indicator 10 provides an upper support or rest surface 40 which is arranged to support the fishing rod. This support surface 40 is generally concave and generally semi-circular to reliably contain the outer periphery of the fishing rod. The fishing line is located below and spaced apart from the rod due to the eyes/eyelets/rings/guides and reel and this thereby causes the fishing line to locate within the retaining slot 38 and to be urged against the upper contact surface of the stylus 14.

In use, the fishing line is arranged to move across the top surface of the V-shaped portion 30 will cause the stylus 14 to move and vibrate as a result of the frictional engagement of the fishing line with the upper surface of the stylus member 14. A rapid change (or acceleration) in the speed of the movement of the fishing line over the stylus member 14 will tend to provide a high signal detected by the sensing means (piezo-electric shaft 32) and transmitted to the signal processing means. Alternatively, the steady motion (relatively even velocity) of a fishing line over the stylus 14 will not provide such a spike in activity as detected by the signal processing means. Such a steady motion of a fishing line may be caused by currents within the water or wind conditions and these causes of fishing line deviation and velocity will not instigate an indication of a bite alarm with the present invention.

Specifically, an acceleration will produce a change in amplitude for the detected signal which is transmitted to the signal processor. This change in amplitude of the signal is indicative of an acceleration which may originate from a bite. If the line is static then no signal (or zero frequency) will be transmitted to the signal processor. If the fishing line is moving with a relatively constant velocity (even a relatively high velocity) then a signal with a uniform or even amplitude will be transmitted to the signal processor. Again, this would not trigger an alarm signal. However, if the fishing line velocity suddenly increases (from either a static position, low velocity or even a high velocity) then the amplitude of the detection signal will suddenly increase. This increase in amplitude will be detected by the signal processor which will then generate an alarm condition to instigate the visual/audible alarms for the angler.

Prior art systems may solely rely on detecting a frequency above a specific limit which is indicative of a specific fishing line velocity. However, in conditions such as strong currents, high winds etc., the fishing line may have a "normal" or "ambient" line speed close to or even above this limit. Such conditions can therefore mean that false alarms are easily triggered. The trigger or threshold velocity can be increased but his may result in genuine bites not being detected. Alternatively, the angler may simply choose to ignore the alarms and will therefore miss the genuine bites.

In addition, the bite indicator 10 comprises an indicating light 42 which can be actuated by a remote actuator. This indicating light is a position indicator or location indicator light. The indicator light is positioned or mounted on a rear side of the housing 12 such that the light can be viewed from the rear side. The indicator light may be located on the bite detecting/monitoring unit and the actuator may be provided on a portable unit to which are in wireless communication. An example would be an LED on the rear, or lake facing side of the bite detector, that can be activated at night by a hand held device, to guide the angler back to his 'pitch' if he has been out on the lake in a boat checking other locations to fish. This indicator light is arranged to be illuminated as a bite or movement is detected and this may help to warn off ducks/swans on the water which may interrupt the fishing line and generate a false signal.

Accordingly, the present invention provides a bite indicator which will not easily trigger false alarms as a result of conditions effecting the movement of the fishing line in a relatively even manner. A fishing bite is generally a rapid movement or event and this can now be reliably detected using the present invention. More specifically, a fishing bite may produce particular patterns which may be shown by a pattern of movement of the fishing line.

The present invention uses representations/profiles of genuine bites and utilises key components of these to trigger an alarm signal. For example, the fishing line velocity remaining above a level for a set period of time, the fishing line suddenly changing velocity (accelerating), the fishing line cadence demonstrating that the fishing line has a repetitive stop-start movement etc. The bite detector may have such profiles and key components programmed and these are customisable. The present invention thereby provides a dynamic detections system rather than a static system simply looking for a parameter to exceed a single set value.

The bite detector and specifically the portable unit may have Bluetooth capability to easily upgrade and customise the behavioural bite indicators. Accordingly, the behavioural patterns and key components may be customised on a computer or downloaded on to a computer (or similar device) prior to be being transferred to the portable unit of the bite indicator. A database of behavioural bite patterns may be accessible to easily and quickly customise the bite indicator for the specific type and location of fishing.

The term acceleration is used to refer to the rate of change of the velocity of the fishing line in either direction, i.e. towards the reel or away from the reel. If the velocity suddenly changes (accelerates) in (or towards) either direction then this will be detected. Accordingly, the present invention can reliably detect conventional bites and also drop back bites since the fishing line may be caused to accelerate in either direction by the different types of bites (and conditions).

The present invention provides a bite indicator 10 which locates below the fishing rod with the fishing line resting within the head 30 of the stylus 14. The bite indicator 10 may include a transmitter to transmit wireless signals to a receiver wherein the receiver comprise a telephone and, in particular, comprise a mobile phone (smart phone). Accordingly the wireless transmission may comprise a Bluetooth transmitter to send signals to the connected smart phone.

Accordingly, the smart phone which may have a dedicated mobile app or other control system may be able to monitor the bite indicator 10. For example, the smart phone may be arranged to produce audible and/or visual indications of a bite or other condition (e.g. fall back mode). In addition, a user will be able to continually monitor the status of the bite indicator 10 even if they are located remote from the bite indicator (for example outside visual and/or audible contact with the bite indicator). The use of a dedicated app will enable a user to quickly and easily customise the signals generated by the smart phone in response to the signals received from the bite indicator 10. In addition, such an app may enable a single user or single mobile phone to monitor a plurality of (several) bite indicators 10 at once and produce different audible and visual alarms for each to help a single user distinguish the bite indicator from each other. Finally, the app may also have the pre-loaded profiles for the bite movement patterns and key components for indicating a bite.

Specific embodiments of the present invention include an additional detection ('buddy') button provided on the controller 20. This button can be pressed and causes the bite indicator 10 monitoring unit 18 to beep, with a distinctive tone, to attract the attention of the user. The monitoring unit 18 and the portable control unit 20 both have a transmit/receive capability and this is conducted wirelessly. For example, the portable control unit 20 may transmit in order to send a signal to a monitoring unit 18. Conversely, the portable control unit 20 may receive signals from the head of the monitoring unit 18.

The buddy button may also be used to emit a signal from a second portable control unit and in a distinctive tone from a conventional bite. For example, a first user may operate a button on their portable control unit which triggers an audible alarm signal from a monitoring unit of a second person (e.g. a friend/buddy). This signal may be arranged to emit a particular audible alert from the portable control unit of the second person. This provides a simple communication system to enable a first person to trigger an audible alarm from the portable control unit of a second person.

Furthermore, in some embodiments, light pipes (not shown) are used to direct and transmit light from LEDs mounted on an internal printed circuit board of the monitoring unit 18. Similarly, light pipes (not shown) may be used to direct light from LEDs mounted on an internal printed circuit board of the handheld portable control unit 20. A light pipe (fibre optic cable) may also extend from a connector 60 to a light emitting element provided on the weight bobbin which pulls the fishing line into tension as previously described. The illuminated bobbin helps to show the movement of the bobbin.

As described above, the present invention provides user programmability of the bite sensing. A user is able to customise the bite characteristics/functions and/or parameters to be monitored and these levels and shapes of the signals can be changed and altered by a user. This enables the user to decide how sensitive the system is and/or the sensitivity for detecting particular characteristics or traits of the bite data. For example, a user may want a high sensitivity regarding a change in velocity of the fishing line but a low sensitivity regarding the actual velocity value. This may be used in currents where the velocity of the line may be relatively high but the bite detector will be sensitive to a change in this steady velocity. The programmability may be undertaken by any suitable device and the bit detector preferably has a wireless communication system to enable the sensitivity fields to be altered and set. For example, a user may use a PC, smart phone, tablet etc. to decide and select the desired bite sensing characteristics. This information and data can then be wirelessly transferred into the bite detector system.

The present invention provides an improved bite detector with low false alarm rate by means of monitoring line speed acceleration.

Due to the behaviour of the line in the process of trying to catch any particular type of fish in different conditions there are many parameters that can be mointored/sensed in order to decrease the false alarm rate. The present invention is sophisticated and can be manipulated to monitor various parameters in order to increase the sensitivity and to discriminate between a true bite and a false alarm situation.

The bite indicator may indicate line speed by way of measuring the voltage output from the piezo sensor that, generally speaking, vibrates more when the line runs faster, thus producing a higher voltage. By monitoring this voltage the software can provide an indication of speed, ignoring low speeds below a certain threshold, the "sensitivity" of which can be varied. Whilst a number of sensitivity levels (for example, 4) may be implemented such an effect may be to simply translate the sensor voltage into a rate of beeps/flashes, which the user must interpret to decide of there is a genuine bite or not.

If the appropriate sensitivity level has been set, then only a genuine bite would cause the detector to alarm at all but it may still be possible that the alarm will sound for other reasons. The additional "information" provided by the rate of beeps/flashes may help the user decide if it is a false alarm or not.

This may be sufficient but there is a risk that variable conditions and the use of different equipment could mean the sensor voltage varies significantly from one situation to another, meaning the limited number of sensitivity options may not provide enough flexibility to achieve the right balance between detection and false alarms.

The present invention aims to provide an improved way to discriminate between a line movement due to a bite and other line movement. For example, if a bite causes a sudden movement and "other causes" do not, then the detection of the rate of change of speed, i.e. acceleration provides an improved detection system.

The different sensitivity levels may select various parameters used to discriminate between "fast" speed changes due to a bite versus "slower" changes due to other things. This would include the rate of change of voltage (dv/dt) but might also set a minimum speed threshold, minimum change in speed and/or minimum time over which the speed change is measured. This may remove some of the variables from the equation, allowing good discrimination in almost all conditions from a small number of user selectable levels.

The present invention may be used to set a length of the alarm and how fast the beeps/flashes should be once a bite has been detected, e.g. the larger the step change in speed the faster the beeps and/or the beeps may carry on for a while and may be re-triggered by another step change in speed.

This detection of acceleration may provide an improvement over a speed only detection method, in particular once tuned. Further embodiments of the present invention may implement a more sophisticated algorithm that performs a form of auto gain/threshold where the device can automatically modify the detection parameters by itself.

In order to come up with a set of parameters to determine the discrimination thresholds it may be necessary to gather a lot of data from a number of scenarios to be analysed, synchronised with actual events at the time in order to determine what constitutes a bite and what doesn't. Such a procedure may be done in the field and would be robust and relatively easy to set up and use.

In order to facilitate this may require a special build of firmware for the bite indicator that simply takes ADC (analogue-to-digitl aconverter) readings and transmits the values on the serial port, connected to a laptop via a USB-serial interface (possibly mounted in the battery compartment and used to provide power to the unit). The laptop would run a program (for example, VB.net) to log the data with buttons to press that insert timing events into the log, e.g. [casting], [steady state], [bite] etc. that can be clicked as things happen. The voice recorder could be run at the same time so descriptions of what's going on can be used to help correlate the readings to events (would need to be time synchronised).

There would be a number of ways to create logs and one other method way is to transmit the ADC readings and collect them with a bespoke receiver (e.g. comprising a mini868 board) and transmit this out to a serial port.

In a bite indicator incorporating a speed only detection mechanism then the set up may require consideration of at least some of the above mentioned possibilities.

One option to cater for a larger range of conditions/equipment is to increase the number of selectable levels and the correct level may need to be selected.

To optimise the memory space, the voltage to beep frequency algorithm could be implemented in a different way. For example, a mix of LUT (look-up table) and variable scaling/offset adjustment could be utilised. In order to sleect the correct level a user may need to cycle through a multitude of levels by means of a two button/two LED user interface although it is appreciated that other methods may be used.

To speed up cycling through the options a user could press and hold a first button (VOL key) for 3 seconds to cycle to the next level, but if the user taps a second button (PWR key) whilst holding down the first button (VOL key) it skips a level and restarts a 3 second time out. By tapping the secoodn button (PWR key) multiple times a user can quickly skip a number of levels. When the timeout is allowed to expire the selected level is indicated by beeps / flashes. Accordingly, the user may be required to count the beeps/flashes.

In order to save battery power, the device may include a "sleep" mode. However, if the bite indicator detects a change from a normal signal then the bite indicator may be arranged to "wake up" and exit the sleep mode.

## Claims

1. A bite indicator (10) comprising a housing (12), guide means (16) for guiding a fishing line relative to the housing (12), a stylus (14) movably mounted relative to the housing (12), a control means, a signal processing means and a sensing means for sensing movement of the stylus (14);
wherein the stylus (14) is arranged to contact a fishing line such that movement of the fishing line relative to the stylus (14) causes the stylus (14) to vibrate and the sensing means senses the vibrations and transmits a signal to the signal processing means;
the signal processing means being arranged to monitor the signal over a period of time and to compare the signal with a signal detected earlier; and
wherein the signal processing means is arranged to generate an alarm signal dependent upon a comparison of the signal over the period of time, said bite indicator being **characterised in that**:
the signal processing means is arranged to measure the acceleration of the fishing line over the stylus (14) and the control means provides a predetermined threshold acceleration wherein the alarm signal is generated if the predetermined threshold acceleration is exceeded.

2. A bite indicator (10) according to Claim 1 in which the alarm signal is generated as a result of the behaviour of the signal over the period of time.

3. A bite indicator (10) according to Claim 1 or Claim 2 in which the signal processing means comprises a plurality of signal behaviours which are being monitored and which, when detected, will generate the alarm signal.

4. A bite indicator (10) according to Claim 3 in which the signal behaviours comprise:
i. the detection of the signal above a threshold for a predetermined length of time; and
ii. the change in the signal and wherein this change in signal is above a predetermined threshold.

5. A bite indicator (10) according to Claim 3 or Claim 4 in which the signal behaviours comprise a cadence indicating a repetitive increase in signal above a set level followed by a decrease below a set level.

6. A bite indicator (10) according to any one of Claim 3 to Claim 5 in which the alarm signal is generated as a result of a combination of signal behaviours.

7. A bite indicator (10) according to any preceding claim in which the signal from the stylus (14) is processed to provide a waveform and wherein the amplitude of the waveform is a parameter being monitored to generate the alarm signal and in which a change in amplitude of the monitored signal over a predetermined amount of time above a threshold limit is arranged to generate the alarm signal and the derivative of the amplitude over a set period of time of the monitored signal above a predetermined threshold limit is arranged to generate the alarm signal.

8. A bite indicator (10) according to any preceding claim in which the signal processing means monitors the signal at a first time and monitors the signal at a second time and calculates a difference in the signal over this time period and wherein the alarm signal is generated when this change is above a predetermined value and/or when the signal maintains a level above a predetermined threshold for a predetermined period of time.

9. A bite indicator (10) according to any preceding claim in which the housing (12) comprises retaining means to retain the stylus (14) to the housing (12) and wherein the retaining means comprises a fixing base and, in which, the fixing base is pivotal from a first position to a second position and wherein the fixing base is retained in the first position as the fishing line moves in a first direction and retained in the second position as the fishing line moves in a second opposite direction and in which the bite indicator (10) comprises a position indicator to indicate if the fixing base is in the first position or the second position.

10. A bite indicator (10) according to any preceding claim in which the stylus (14) comprises a piezo-electric material.

11. A bite indicator (10) according to any preceding claim in which the sensing means distinguishes between the different directions of movement of the fishing line and the bite indicator (10) detects acceleration in either direction of the fishing line in order to detect conventional bites with the fishing line moving in one direction and also drop back bites with the fishing line moving in an opposite direction.

12. A bite indicator (10) according to any preceding claim in which the bite indicator comprises a portable operating unit (20).

13. A bite indicator (10) according to any preceding claim in which the portable operating unit comprises a vibrating alarm.

14. An angling assembly comprising a fishing rod, a fishing line and a bite indicator (10), the bite indicator (10) comprising a housing (12), guide means (16) for guiding the fishing line relative to the housing (12), a stylus (14) movably mounted relative to the housing (12), a control means, a signal processing means and a sensing means for sensing movement of the stylus (14);
wherein the stylus (14) is arranged to contact a fishing line such that movement of the fishing line relative to the stylus (14) causes the stylus (14) to vibrate and the sensing means senses the vibrations and transmits a signal to the signal processing means;
the signal processing means being arranged to monitor the signal over a period of time and to compare the signal with a signal detected earlier; and wherein the signal processing means is arranged to generate an alarm signal dependent upon a comparison of the signal over the period of time, said assembly being **characterised in that**:
the signal processing means is arranged to measure the acceleration of the fishing line over the stylus (14) and the control means provides a predetermined threshold acceleration wherein the alarm signal is generated if the predetermined threshold acceleration is exceeded.

15. A method of indicating a bite, the method comprising providing a bite indicator (10) for mounting to an angling apparatus, the bite indicator (10) comprising a housing (12), guide means (16) for guiding a fishing line relative to the housing (12), a stylus (14) movably mounted relative to the housing (12), a control means, a signal processing means and a sensing means for sensing movement of the stylus (14); the method comprising:
locating a fishing line over a contact surface of the stylus (14) such that movement of the fishing line relative to the stylus (14) causes the stylus (14) to vibrate;
sensing vibrations of the stylus (14) and transmitting a signal to the signal processing means;
monitoring the signal over a period of time and comparing the signal with a signal detected earlier; and
generating an alarm signal dependent upon a comparison of the signal over the period of time, said method being **characterised in that** it comprises:
measuring the acceleration of the fishing line over the stylus (14) by the signal processing means and generating the alarm signal if a predetermined threshold acceleration provided by the control means is exceeded.

## Patentansprüche

1. Bissanzeiger (10), umfassend ein Gehäuse (12), ein Führungsmittel (16) zum Führen einer Angelschnur relativ zum Gehäuse (12), einen Stift (14), der beweglich relativ zum Gehäuse (12) montiert ist, ein Steuermittel, ein Signalverarbeitungsmittel und ein Sensormittel zum Erfassen der Bewegung des Stiftes (14) ;
wobei der Stift (14) so angeordnet ist, dass er die Angelschnur derart berührt, dass die Bewegung der Angelschnur relativ zum Stift (14) bewirkt, dass der Stift (14) vibriert und das Sensormittel die Vibrationen erfasst und ein Signal an das Signalverarbeitungsmittel überträgt;
wobei das Signalverarbeitungsmittel so eingerichtet ist, dass es das Signal über eine Zeitdauer überwacht und das Signal mit einem früher detektierten Signal vergleicht; und
wobei das Signalverarbeitungsmittel so eingerichtet ist, dass es ein Alarmsignal abhängig von einem Vergleich des Signals über die Zeitdauer generiert, wobei der Bissanzeiger
**dadurch gekennzeichnet ist, dass**
das Signalverarbeitungsmittel derart eingerichtet ist, dass es die Beschleunigung der Angelschnur über den Stift (14) misst und das Steuermittel eine vorgegebene Schwellenbeschleunigung bereitstellt, wobei das Alarmsignal erzeugt wird, wenn die vorgegebene Schwellenbeschleunigung überschritten wird.

2. Bissanzeiger (10) nach Anspruch 1,
bei welchem das Alarmsignal als Ergebnis des Verhaltens des Signals über die Zeitdauer erzeugt wird.

3. Bissanzeiger (10) nach Anspruch 1 oder Anspruch 2,
bei welchem das Signalverarbeitungsmittel eine Mehrzahl Signal-Verhaltensweisen umfasst, welche überwacht werden und welche, wenn sie detektiert werden, das Alarmsignal erzeugen werden.

4. Bissanzeiger (10) nach Anspruch 3,
bei welchem die Signal-Verhaltensweisen umfassen:
i. die Detektion des Signals oberhalb einer Schwelle für eine vorgegebene Zeitdauer; und
ii. die Veränderung des Signals und wobei diese Veränderung des Signals über einer vorgegebenen Schwelle liegt.

5. Bissanzeiger (10) nach Anspruch 3 oder Anspruch 4,
bei welchem die Signal-Verhaltensweisen eine Abfolge umfassen, die ein sich wiederholendes Ansteigen des Signals über einen eingestellten Pegel und ein Abfallen unter einen eingestellten Pegel umfasst.

6. Bissanzeiger (10) nach einem der Ansprüche 3 - 5,
bei welchem das Alarmsignal als Ergebnis einer Kombination von Signal-Verhaltensweisen erzeugt wird.

7. Bissanzeiger (10) nach einem der vorigen Ansprüche,
bei welchem das Signal von dem Stift (14) verarbeitet wird, um eine Wellenform zur Verfügung zu stellen, und wobei die Amplitude der Wellenform ein Parameter ist, welcher überwacht wird, um das Alarmsignal zu erzeugen, und wobei eine Änderung der Amplitude des überwachten Signals, wenn sie über eine vorgegebene Zeitdauer oberhalb einer Grenzschwelle liegt, so eingerichtet ist, dass das Alarmsignal erzeugt wird, und wobei die Ableitung der Amplitude, wenn sie über eine voreingestellte Zeitdauer des überwachten Signals oberhalb einer vorgegebenen Grenzschwelle liegt, dazu eingerichtet ist, das Alarmsignal zu erzeugen.

8. Bissanzeiger (10) nach einem der vorigen Ansprüche,
bei welchem das Signalverarbeitungsmittel das Signal zu einem ersten Zeitpunkt überwacht und das Signal zu einem zweiten Zeitpunkt überwacht und eine Differenz des Signals über diese Zeitdauer berechnet und wobei das Alarmsignal erzeugt wird, wenn diese Änderung oberhalb eines vorgegebenen Wertes liegt und/oder wenn das Signal einen Pegel oberhalb einer vorgegebenen Schwelle für eine vorgegebene Zeitdauer beibehält.

9. Bissanzeiger (10) nach einem der vorigen Ansprüche,
bei welchem das Gehäuse (12) ein Haltemittel zum Halten des Stiftes (14) am Gehäuse (12) umfasst und wobei das Haltemittel einen Fixiergrundabschnitt umfasst, und wobei der Fixiergrundabschnitt von einer ersten Position in eine zweite Position schwenkbar ausgebildet ist, und wobei der Fixiergrundabschnitt in der ersten Position gehalten wird, während die Angelschnur sich in einer ersten Richtung bewegt, und in einer zweiten Position gehalten wird, während sich die Angelschnur in einer zweiten, entgegengesetzten Richtung bewegt, und wobei der Bissanzeiger (10) einen Positionsanzeiger umfasst, um anzuzeigen, ob der Fixiergrundabschnitt sich in der ersten Position oder der zweiten Position befindet.

10. Bissanzeiger (10) nach einem der vorigen Ansprüche,
bei welchem der Stift (14) ein piezoelektrisches Material umfasst.

11. Bissanzeiger (10) nach einem der vorigen Ansprüche,
bei welchem das Sensormittel zwischen den unterschiedlichen Bewegungsrichtungen der Angelschnur unterscheidet und der Bissanzeiger (10) die Beschleunigung in jeder Richtung der Angelschnur detektiert, um konventionelle Bisse, bei denen die Angelschnur sich in einer Richtung bewegt, und auch Dropback-Bisse zu detektieren, bei denen sich die Angelschnur in einer entgegengesetzten Richtung bewegt.

12. Bissanzeiger (10) nach einem der vorigen Ansprüche,
bei welchem der Bissanzeiger eine tragbare Bedieneinheit (20) umfasst.

13. Bissanzeiger (10) nach einem der vorigen Ansprüche,
bei welchem die tragbare Bedieneinheit einen Vibrationsalarm umfasst.

14. Angelanordnung, welche eine Angelrute, eine Angelschnur und einen Bissanzeiger (10) umfasst, wobei der Bissanzeiger (10) ein Gehäuse (12), ein Führungsmittel (16) zum Führen der Angelschnur relativ zum Gehäuse (12), einen Stift (14), welcher beweglich relativ zum Gehäuse (12) montiert ist, ein Steuermittel, ein Signalverarbeitungsmittel und ein Sensormittel zum Erfassen der Bewegung des Stifts (14) umfasst;
wobei der Stift (14) so eingerichtet ist, dass er eine Angelschnur derart berührt, dass die Bewegung der Angelschnur relativ zum Stift (14) bewirkt, dass der Stift (14) vibriert und das Sensormittel die Vibrationen erfasst und ein Signal an das Signalverarbeitungsmittel überträgt;
wobei das Signalverarbeitungsmittel so eingerichtet ist, dass es das Signal über eine vorgegebene Zeitdauer erfasst das Signal mit einem früher detektierten Signal vergleicht; und
wobei das Signalverarbeitungsmittel derart eingerichtet ist, dass es ein Alarmsignal in Abhängigkeit von einem Vergleich des Signals über die Zeitdauer erzeugt, wobei die Anordnung
**dadurch gekennzeichnet ist, dass**
das Signalverarbeitungsmittel so eingerichtet ist, dass es die Beschleunigung der Angelschnur über dem Stift (14) misst und das Steuermittel eine vorgegebene Schwellenbeschleunigung bereitstellt, wobei das Alarmsignal erzeugt wird, wenn die vorgegebene Schwellenbeschleunigung überschritten wird.

15. Verfahren zum Anzeigen eines Bisses,
wobei das Verfahren umfasst:
Bereitstellen eines Bissanzeigers (10) zur Befestigung an einer Angelvorrichtung, wobei der Bissanzeiger (10) ein Gehäuse (12), ein Führungsmittel (16) zum Führen einer Angelschnur relativ zum Gehäuse (12), einen Stift (14), der beweglich relativ zu dem Gehäuse (12) befestigt ist, ein Steuermittel, ein Signalverarbeitungsmittel und ein Sensormittel zum Erfassen der Bewegung des Stifts (14) umfasst, wobei das Verfahren folgendes umfasst:
Anordnen einer Angelschnur über einer Kontaktfläche des Stiftes (14) derart, dass die Bewegung der Angelschnur relativ zum Stift (14) bewirkt, dass der Stift (14) vibriert;
Erfassen der Vibrationen des Stiftes (14) und Übertragung eines Signals an das Signalverarbeitungsmittel;
Überwachen des Signals über eine Zeitdauer und Vergleichen des Signals mit einem früher detektierten Signal; und
Erzeugen eines Alarmsignal in Abhängigkeit eines Vergleichs des Signals über die Zeitdauer, wobei das Verfahren
**dadurch gekennzeichnet ist, dass** es folgendes umfasst:
Messen der Beschleunigung der Angelschnur über dem Stift (14) durch das Signalverarbeitungsmittel und Erzeugen des Alarmsignals, wenn eine vorgegebene Schwellenbeschleunigung, die durch das Steuermittel bereitgestellt wird, überschritten wird.

## Revendications

1. Indicateur de touche (10) comprenant un boîtier (12), un moyen de guidage (16) pour guider une ligne de pêche par rapport au boîtier (12), un stylet (14) monté de manière mobile par rapport au boîtier (12), un moyen de commande, un moyen de traitement de signal et un moyen de détection pour détecter un mouvement du stylet (14) ;
le stylet (14) étant agencé pour entrer en contact avec une ligne de pêche de telle sorte qu'un mouvement de la ligne de pêche par rapport au stylet (14) amène le stylet (14) à vibrer, et le moyen de détection détectant les vibrations et émettant un signal vers le moyen de traitement de signal ;
le moyen de traitement de signal étant agencé pour surveiller le signal sur une période de temps et comparer le signal à un signal détecté plus tôt ; et
le moyen de traitement de signal étant agencé pour générer un signal d'alarme en fonction d'une comparaison du signal sur la période de temps, ledit indicateur de touche étant **caractérisé par le fait que** :
le moyen de traitement de signal est agencé pour mesurer l'accélération de la ligne de pêche sur le stylet (14) et le moyen de commande fournit une accélération de seuil prédéterminée, le signal d'alarme étant généré si l'accélération de seuil prédéterminée est dépassée.

2. Indicateur de touche (10) selon la revendication 1, dans lequel le signal d'alarme est généré en conséquence du comportement du signal sur la période de temps.

3. Indicateur de touche (10) selon la revendication 1 ou la revendication 2, dans lequel le moyen de traitement de signal comprend une pluralité de comportements de signal qui sont surveillés et qui, lorsque détectés, généreront le signal d'alarme.

4. Indicateur de touche (10) selon la revendication 3, dans lequel les comportements de signal comprennent :
i. la détection du signal au-dessus d'un seuil pendant une durée prédéterminée ; et
ii. le changement dans le signal, et ce changement dans le signal étant supérieur à un seuil prédéterminé.

5. Indicateur de touche (10) selon la revendication 3 ou la revendication 4, dans lequel les comportements de signal comprennent une cadence indiquant une augmentation répétitive de signal au-dessus d'un niveau défini, suivie d'une diminution au-dessous d'un niveau défini.

6. Indicateur de touche (10) selon l'une quelconque de la revendication 3 à la revendication 5, dans lequel le signal d'alarme est généré en conséquence d'une combinaison de comportements de signal.

7. Indicateur de touche (10) selon l'une quelconque des revendications précédentes, dans lequel le signal provenant du stylet (14) est traité pour fournir une forme d'onde et l'amplitude de la forme d'onde est un paramètre qui est surveillé pour générer le signal d'alarme, et dans lequel un changement d'amplitude du signal surveillé sur une durée prédéterminée au-dessus d'une limite de seuil est destiné à générer le signal d'alarme et la dérivée de l'amplitude sur une période définie du signal surveillé au-dessus d'une limite de seuil prédéterminée est destinée à générer le signal d'alarme.

8. Indicateur de touche (10) selon l'une quelconque des revendications précédentes, dans lequel le moyen de traitement de signal surveille le signal à un premier moment et surveille le signal à un second moment et calcule une différence dans le signal sur cette période, et le signal d'alarme est généré lorsque ce changement est au-dessus d'une valeur prédéterminée et/ou lorsque le signal maintient un niveau au-dessus d'un seuil prédéterminé pendant une période prédéterminée.

9. Indicateur de touche (10) selon l'une quelconque des revendications précédentes, dans lequel le boîtier (12) comprend un moyen de retenue pour retenir le stylet (14) sur le boîtier (12), et le moyen de retenue comprend une base de fixation, et dans lequel la base de fixation est apte à pivoter d'une première position à une seconde position, et la base de fixation étant retenue dans la première position à mesure que la ligne de pêche se déplace dans une première direction et retenue dans la seconde position à mesure que la ligne de pêche se déplace dans une seconde direction opposée, et dans lequel l'indicateur de touche (10) comprend un indicateur de position pour indiquer si la base de fixation se trouve dans la première position ou la seconde position.

10. Indicateur de touche (10) selon l'une quelconque des revendications précédentes, dans lequel le stylet (14) comprend un matériau piézoélectrique.

11. Indicateur de touche (10) selon l'une quelconque des revendications précédentes, dans lequel le moyen de détection distingue les différentes directions de mouvement de la ligne de pêche et l'indicateur de touche (10) détecte une accélération dans chaque direction de la ligne de pêche afin de détecter des touches classiques avec la ligne de pêche se déplaçant dans une direction et également des touches retardées avec la ligne de pêche se déplaçant dans une direction opposée.

12. Indicateur de touche (10) selon l'une quelconque des revendications précédentes, l'indicateur de touche comprenant une unité fonctionnelle portable (20).

13. Indicateur de touche (10) selon l'une quelconque des revendications précédentes, dans lequel l'unité fonctionnelle portable comprend une alarme vibrante.

14. Ensemble de pêche à la ligne comprenant une canne à pêche, une ligne de pêche et un indicateur de touche (10), l'indicateur de touche (10) comprenant un boîtier (12), un moyen de guidage (16) pour guider la ligne de pêche par rapport au boîtier (12), un stylet (14) monté de manière mobile par rapport au boîtier (12), un moyen de commande, un moyen de traitement de signal et un moyen de détection pour détecter un mouvement du stylet (14) ;
le stylet (14) étant agencé pour entrer en contact avec une ligne de pêche de telle sorte qu'un mouvement de la ligne de pêche par rapport au stylet (14) amène le stylet (14) à vibrer, et le moyen de détection détectant les vibrations et émettant un signal vers le moyen de traitement de signal ;
le moyen de traitement de signal étant agencé pour surveiller le signal sur une période de temps et comparer le signal à un signal détecté plus tôt ; et
le moyen de traitement de signal étant agencé pour générer un signal d'alarme en fonction d'une comparaison du signal sur la période de temps, ledit ensemble étant **caractérisé par le fait que** :
le moyen de traitement de signal est agencé pour mesurer l'accélération de la ligne de pêche sur le stylet (14) et le moyen de commande fournit une accélération de seuil prédéterminée, le signal d'alarme étant généré si l'accélération de seuil prédéterminée est dépassée.

15. Procédé pour indiquer une touche, le procédé comprenant fournir un indicateur de touche (10) à monter sur un appareil de pêche à la ligne, l'indicateur de touche (10) comprenant un boîtier (12), un moyen de guidage (16) pour guider une ligne de pêche par rapport au boîtier (12), un stylet (14) monté de manière mobile par rapport au boîtier (12), un moyen de commande, un moyen de traitement de signal et un moyen de détection pour détecter un mouvement du stylet (14) ; le procédé comprenant :
placer une ligne de pêche sur une surface de contact du stylet (14) de telle sorte qu'un mouvement de la ligne de pêche par rapport au stylet (14) amène le stylet (14) à vibrer ;
détecter des vibrations du stylet (14) et émettre un signal vers le moyen de traitement de signal ;
surveiller le signal sur une période de temps et comparer le signal à un signal détecté plus tôt ; et
générer un signal d'alarme en fonction d'une comparaison du signal sur la période de temps, ledit procédé étant **caractérisé par le fait qu'**il comprend :
mesurer l'accélération de la ligne de pêche sur le stylet (14) par le moyen de traitement de signal et générer le signal d'alarme si une accélération de seuil prédéterminée fournie par le moyen de commande est dépassée.
